Europäisches Patentamt

European Patent Office

Office européen des brevets

(19)

(11) Veröffentlichungsnummer: **0 199 055 B1**

(12) **EUROPÄISCHE PATENTSCHRIFT**

(45) Veröffentlichungstag der Patentschrift: **24.07.91**    (51) Int. Cl.⁵: **G01M 3/18**

(21) Anmeldenummer: **86103298.5**

(22) Anmeldetag: **12.03.86**

(54) Verfahren zur Prüfung des Schliesszustandes, der Dichtigkeit oder des Durchtrittsquerschnittes an einem Beeinflussungsorgan, insbesondere einem Absperrorgan für elektrisch leitende Flüssigkeiten, sowie Einrichtung zur Durchführung des Verfahrens.

(30) Priorität: **06.04.85 DE 3512533**

(43) Veröffentlichungstag der Anmeldung:
**29.10.86 Patentblatt 86/44**

(45) Bekanntmachung des Hinweises auf die
Patenterteilung:
**24.07.91 Patentblatt 91/30**

(84) Benannte Vertragsstaaten:
**AT BE CH DE FR GB IT LI NL SE**

(56) Entgegenhaltungen:
**DE-A- 2 057 590**
**DE-A- 2 600 560**
**DE-A- 2 941 337**
**DE-A- 3 330 804**
**US-A- 3 546 691**

(73) Patentinhaber: **A. und K. Müller GmbH & Co.
KG
Bücherstrasse 31-37
W-4000 Düsseldorf 13(DE)**

(72) Erfinder: **Müller, Kurt, Ing. grad.
Benrather Schlossufer 61
W-4000 Düsseldorf 13(DE)**
Erfinder: **Moldenhauer, Hermann
Lüdenscheider Strasse 2
W-4000 Düsseldorf 12(DE)**

(74) Vertreter: **Feder, Heinz, Dr. et al
Dipl.-Ing. P.-C. Sroka, Dr. H. Feder Dipl.-Phys.
Dr. W.-D. Feder, Patentanwälte Dominikanerstrasse 37
W-4000 Düsseldorf 11(DE)**

## Beschreibung

Die Erfindung betrifft ein Verfahren zur Prüfung des Schließzustandes, der Dichtigkeit oder des Durchtrittsquerschnittes an einem Beeinflussungsorgan, insbesondere einem Absperrorgan für elektrisch leitende Flüssigkeiten, bei dem die elektrische Leitfähigkeit zwischen zwei Elektroden bestimmt wird, die gegeneinander isoliert angeordnet sind und lediglich über die elektrisch leitende Flüssigkeit in Kontakt geraten können.

Es sind eine Reihe von Verfahren bekannt, um an Absperrorganen, insbesondere Ventilen, eine Gehäuse- und/oder Sitzdichtigkeitsprüfung vorzunehmen. So ist es beispielsweise bekannt, den Prüfling mit Druckluft oder Druckflüssigkeit zu füllen, ihn statisch unter Druck stehen zu lassen, um dann den Druckabfall pro Zeiteinheit zu messen. Weiterhin ist es bekannt, den Prüfling mit einem Helium enthaltenden Gasgemisch zu füllen, um dann an undichten Stellen das Entweichen des Heliums nachzuweisen. Es ist auch möglich, einen mit Druckluft gefüllten Prüfling in ein Wasserbad zu tauchen, um dann anhand von aufsteigenden Blasen Undichtigkeiten am Gehäuse oder am Ventilsitz festzustellen.

Schwieriger ist es, in geschlossenen Systemen den Schließzustand und die Dichtigkeit eines Ventils, beispielsweise eines Magnetventils zu überprüfen. Hierzu ist eine Flußüberwachung des Mediums notwendig, die aber relativ aufwendig ist und bei der eventuelle Schleichverluste nur bedingt meßtechnisch erfaßbar sind.

In der DE-PS 20 57 590 ist eine Vorrichtung zur Dichtigkeitsprüfung der Dichtungsstelle zwischen den beiden Dichtflächen eines Absperrorgans beschrieben. Das mit dieser Vorrichtung ausgeübte Prüfverfahren weist die eingangs angegebenen Merkmale auf.

Bei dieser bekannten Vorrichtung sind die Elektroden, zwischen denen die Leitfähigkeit bestimmt wird, an der Dichtungsstelle selbst längs der ganzen Dichtungsfugenlänge angeordnet. Dies macht einen aufwendigen Eingriff in den Aufbau des Ventils notwendig, der bei kleinen Ventilen, wie sie z.B. in Dialysegeräten verwendet werden, oft gar nicht möglich ist. Die bekannte Vorrichtung hat den Nachteil, daß der konstruktive Aufwand beträchtlich ist und die sehr präzise Anordnung der Elektroden in der Dichtungsfläche kritisch ist. Weiterhin muß jede einzelne zu überwachende Dichtungsstelle mit einer solchen aufwendigen in das Ventil selbst eingearbeiteten Konstruktion ausgerüstet sein.

Die der Erfindung zugrunde liegende Aufgabe bestand darin, ein Verfahren der eingangs erwähnten Art zu schaffen, das einfach und ohne großen technischen Aufwand am Prüfling durchführbar ist, dabei aber wenig störanfällig ist und sehr präzise Aussagen über den Schließzustand, die Dichtigkeit oder den Durchtrittsquerschnitt eines Beeinflussungsorgans erlaubt.

Die Lösung dieser Aufgabe geschieht erfindungsgemäß dadurch, daß jede über Festkörper laufende elektrisch leitende Verbindung zwischen der Zuflußseite und der Abflußseite des Beeinflussungsorgans unterbrochen ist und die eine Elektrode vor der Zuflußseite und die andere Elektrode hinter der Abflußseite des Beeinflussungsorgans mit der elektrisch leitenden Flüssigkeit in Kontakt gebracht wird.

Zahlreiche vorteilhafte Ausführungsformen des erfindungsgemäßen Verfahrens sind möglich. So ist es bei Ventilen, bei denen mindestens alle mit der elektrisch leitenden Flüssigkeit in Berührung geratenden Teile aus Kunststoff bestehen, besonders zweckmäßig, wenn die Elektroden an vorgegebenen Stellen im Durchtrittsweg der Flüssigkeit jeweils vor und hinter dem Ventilsitz angeordnet werden und der elektrische Leitwert im geschlossenen und geöffneten Zustand des Ventils gemessen und verglichen wird. Bei einem Ventil mit vom Medium getrenntem Betätigungsteil ist es weiterhin vorteilhaft, wenn im Betätigungsteil eine zusätzliche Elektrode angeordnet wird und der elektrische Leitwert zwischen dieser zusätzlichen Elektrode und den übrigen Elektroden im geöffneten und/oder geschlossenen Zustand des Ventils gemessen wird.

Als zusätzliche Elektrode kann dabei der aus elektrisch leitendem Material bestehende Magnetanker, bzw. die Magnetankerführung dienen.

Bei einer anderen Ausführungsform des Verfahrens, die bei einem eigenmediumsgesteuerten Ventil angewendet werden kann, dessen Zuflußseite über einen im Verschlußorgan angeordneten Durchtrittskanal mit einem Medium beaufschlagten Druckraum verbunden ist, kann im Druckraum eine zusätzliche Elektrode angeordnet werden und der elektrische Leitwert zwischen dieser zusätzlichen Elektrode und der zuflußseitig angeordneten Elektrode gemessen werden.

Schließlich kann das erfindungsgemäße Verfahren auch angewendet werden zur Prüfung des Schließzustandes oder der Dichtigkeit eines Absperrorgans oder eines abgeschlossenen Leitungssystems aus elektrisch leitendem Material. Hierbei wird in die Zuleitung des Absperrorgans oder des Leitungssystems ein eine elektrische Trennstelle bildendes Rückschlagventil aus Kunststoffmaterial eingeschaltet, dessen Zuflußseite an eine Flüssigkeitsdruckquelle angeschlossen ist, mittels der das Absperrorgan bzw. Leitungssystem im geschlossenen Zustand unter einen vorgegebenen Flüssigkeitsdruck gesetzt wird. Es wird dann zwischen den vor der Zuflußseite und hinter der Abflußseite des Rückschlagventils angeordneten Elektroden der Leitwert gemessen und dadurch der Schließzustand des Rückschlagventils bestimmt.

Gegenstand der Erfindung ist weiterhin eine Einrichtung zur ständigen Überwachung des Öffnungs- und Schließzustandes eines Ventils oder eines Systems von Ventilen für elektrisch leitende Flüssigkeiten nach dem erfindungsgemäßen Verfahren, bei der im jedem zu überwachenden Ventil zwei Elektroden gegeneinander isoliert deart angeordnet sind, daß sie lediglich über die elektrisch leitende Flüssigkeit in Kontakt geraten können und die Elektroden mit einer elektrischen Auswerteschaltung zur Messung des Leitwertes zwischen den Elektroden verbunden sind. Die Einrichtung ist dadurch gekennzeichnet, daß bei Ventilen, bei denen mindestens alle mit der elektrisch leitenden Flüssigkeit in Berührung geratenden Teile aus Kunststoff bestehen, in jedem der Ventile vor der Zuflußseite und hinter der Abflußseite jeweils eine Elektrode im Flüssigkeitsdurchtrittsweg angeordnet ist und die Auswerteschaltung in vorgegebenen Abständen Leitwertmessungen durchführt und mit Registrier- und/oder Alarmeinrichtungen verbunden ist.

Das erfindungsgemäße Verfahren geht von der Erkenntnis aus, daß es nicht notwendig ist, die Elektroden, zwischen denen die Leitfähigkeit bestimmt werden soll, in die Dichtungsflächen selbst zu verlegen, wenn man dafür sorgt, daß zwischen der Zuflußseite und der Abflußseite des zu überprüfenden Beeinflussungsorgans keine andere elektrisch leitende Verbindung, als die, die über ihren ganzen Weg durch die elektrisch leitende Flüssigkeit läuft, vorhanden ist.

Diese Voraussetzungen sind gegeben bei Beeinflussungsorganen, die aus elektrisch nicht leitendem Material aufgebaut sind, beispielsweise bei Ventilen, bei denen mindestens alle mit der elektrisch leitenden Flüssigkeit in Berührung stehenden Teile, also insbesondere das den Zufluß und den Abfluß umschließenden Gehäuse sowie Ventilsitz und Ventilteller aus Kunststoff bestehen. Bei einem derartigen Ventil ist ein Fluß des elektrischen Stromes von der Zuflußseite zur Abflußseite nur über das elektrisch leitende Medium selbst möglich. Dies hat zur Folge, daß die elektrische Leitfähigkeit zwischen Zuflußseite und Abflußseite sehr unterschiedliche Werte aufweist, je nachdem, ob das Ventil vollkommen geschlossen ist oder nicht. Bei der Ausführung eines entsprechenden Meßverfahrens sind die Elektroden, zwischen denen der Leitwert bestimmt wird, jeweils an einer beliebigen Stelle im Durchtrittsweg der Flüssigkeit vor und hinter dem Ventilsitz angeordnet.

Die Auswahl der Kunststoffe und der Dichtwerkstoffe, aus denen das Ventil aufgebaut sein muß, ist nicht sehr kritisch, denn die meisten dieser Werkstoffe besitzen einen sehr niedrigen spezifischen elektrischen Leitwert. Es muß lediglich eine eventuelle Änderung des Leitwertes infolge einer Wasseraufnahme dieser Werkstoffe beachtet werden. Es hat sich herausgestellt, daß in Abhängigkeit vom elektrischen Leitwert des Mediums der auswertbare Unterschied im gemessenen Leitwert beim vollkommen geschlossenen Ventil gegenüber dem undichten Ventil außerordentlich groß ist. Um Polarisationseffekte auszuschalten, ist es zweckmäßig, die Leitwertmessung mit Wechselstrom oder Gleichstromimpulsen wechselnder Polarität durchzuführen.

Das erfindungsgemäße Verfahren ist außerordentlich vielseitig anwendbar.

So kann beispielsweise, wie weiter unten an Ausführungsbeispielen dargestellt, bei Ventilen mit von Medium durch eine Sperrmembran, Rollmembran oder Faltenbalg getrenntem Betätigungsteil das erfindungsgemäße Meßverfahren sowohl zur Überprüfung der Dichtigkeit des Ventilsitzes als auch zur Überprüfung der Dichtigkeit der das Medium trennenden Organe verwendet werden.

Ebenso kann, wie weiter unten näher dargestellt, bei servogesteuerten Magnetventilen mit dem erfindungsgemäßen Verfahren außer der Dichtigkeit des Ventilsitzes selbst auch die Dichtigkeit des Pilotventils überprüft werden und es kann der Durchtrittsquerschnitt einer Steuerbohrung im Ventilteller gemessen werden. Dieser Aspekt ist für Serienprüfungen an derartigen Ventilen sehr wichtig.

Ein sehr wichtiger Anwendungsfall des erfindungsgemäßen Verfahrens ist die Überprüfung von in Reihe geschalteten Ventilen, die in besonders kritischen Bereichen, beispielsweise bei Luftbefeuchtungsanlagen, Getränkeautomaten u. dgl., eingesetzt werden, da derartige Geräte in keinem Fall Überschwemmungen verursachen dürfen. Die absolute Dichtigkeit derartiger Doppelsicherheitsventile ist nur dann gegeben, wenn der Schließzustand beider Ventile genauestens überwacht werden kann.

Es wird noch besonders hingewiesen auf eine Anwendungsmöglichkeit des erfindungsgemäßen Verfahrens bei Dialysegeräten, in denen eine große Anzahl von Kunststoffventilen mit vom Medium getrennten Betätigungsteilen miteinander verknüpft sind. Bei derartigen Geräten kann die Funktionssicherheit sämtlicher Ventile sowie die Dichtigkeit der Trennmembranen mit dem erfindungsgemäßen Verfahren in einfacher und zuverlässiger Weise ständig überwacht werden.

Das erfingungsgemäße Verfahren ist aber auch anwendbar zur Prüfung des Schließzustandes oder der Dichtigkeit eines Absperrorgans oder eines abgeschlossenen Leitungssystem, welches nicht aus Kunststoff, sondern aus elektrisch leitendem Material besteht Die große Meßempfindlichkeit des Verfahrens gestattet es, hier eine indirekte Prüfung durchzuführen.

Das in die Zuleitung eingeschaltete federbelastete Rückschlagventil aus Kunststoff öffnet nur dann, wenn aufgrund einer Undichtigkeit im nachgeschalteten Absperrorgan oder Leitungssystem dort Flüssigkeit austritt. Der Öffnungs- oder Schließzustand des vorgeschalteten Rückschlagventils wird nach dem erfindungsgemäßen Verfahren gemessen und erlaubt eine Aussage über die Dichtigkeit des nachgeschalteten Absperrorgans oder Leitungssystem. Auf diese Weise ist die Anwendbarkeit des erfindungsgemäßen Verfahrens beträchtlich erweitert und es können beispielsweise ganze Hausinstallationen oder auch beispielsweise Kühlwasserkanäle im Motorblock eines Kraftfahrzeuges auf ihre Dichtigkeit hin überprüft werden.

Eine weitere Anwendung des erfindungsgemäßen Verfahrens in dieser indirekten Form ist die Überprüfung und Überwachung von wasserführenden Haushaltsgeräten, also Waschmaschinen, Spülmaschinen u. dgl., die im allgemeinen über Schläuche an die Wasserleitung angeschlossen sind. Es sind hier Überwachungsvorrichtungen bekannt, bei denen beispielsweise an der Anschlußstelle des Gerätes, also unmittelbar nach dem Wasserhahn, ein Sicherheits-Magnetventil angeordnet ist, das von einer elektrischen Steuervorrichtung in die Schließstellung gesteuert wird, sobald von einer Sensoreinrichtung, beispielsweise einem auf dem Fußboden angeordneten Feuchtigkeitsfühler, ein eine Undichtigkeit anzeigendes Steuersignal abgegeben wird.

Auch hier führt die Anwendung des erfindungsgemäßen Verfahrens zu einer Einrichtung, mit der eine ständige Überprüfung in einfacher und sehr zuverlässiger Weise durchgeführt werden kann, wie weiter unten anhand eines Ausführungsbeispiels näher erläutert wird. Diese Anwendungsform des erfindungsgemäßen Verfahrens hat gegenüber bekannten Überprüfungsverfahren den Vorteil, daß nicht erst eine größere Menge Wasser austreten muß, um das Sicherheits-Magnetventil in die Schließstellung zu steuern.

Im folgenden werden anhand der Zeichnungen Ausführungsbeispiele des erfindungsgemäßen Verfahrens und Einrichtungen zu seiner Durchführung näher erläutert.

In den Zeichnungen zeigen:

Fig. 1 in einer Schnittdarstellung ein Magnetventil zur Darstellung einer ersten Ausführungsform des Verfahrens zur Prüfung des Schließzustandes und der Dichtigkeit;

Fig. 2 in einer Schnittdarstellung ein eigenmediumgesteuertes Ventil zur Darstellung einer weiteren Ausführungsform des Verfahrens zur Prüfung des Schließzustandes und des Durchtrittsquerschnittes der Steuerbohrung;

Fig. 3 in einer Schnittdarstellung ein Doppelsicherheitsventil aus zwei in Reihe geschalteten Ventilen zur Darstellung einer Variante des Verfahrens zur Prüfung des Schließzustandes;

Fig. 4 in einer Schnittdarstellung eine ein Rückschlagventil enthaltende Anordnung zur indirekten Messung des Schließzustandes eines Absperrorgans;

Fig. 5 in einer schematischen Darstellung eine Einrichtung zur Überwachung eines wasserführenden Haushaltsgerätes.

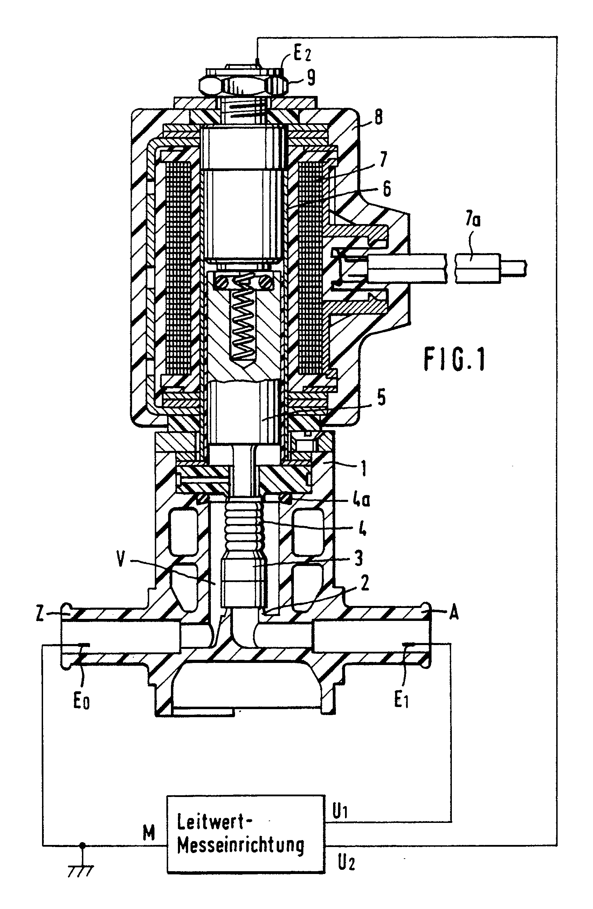

In Fig. 1 ist ein Magnetventil zur Steuerung einer Flüssigkeit dargestellt, bei dem alle mit der elektrisch leitenden Flüssigkeit in Berührung kommenden Teile aus Kunststoff bestehen. Das Ventil besitzt ein Gehäuse 1 mit einem Zuflußstutzen Z und einem Abflußstutzen A. Zwischen dem Zuflußstutzen Z und dem Abflußstutzen A ist in der Ventilkammer v ein Ventilsitz 2 angeordnet, dem ein Ventilteller 3 gegenüberliegt, der von einem mit seinem Rand 4a am Gehäuse dichtend befestigten Faltenbalg 4 vollständig umgeben ist, so daß er selbst mit dem in der Ventilkammer V enthaltenen Medium nicht in Berührung kommt. Der Ventilteller 3 ist fest verbunden mit einem Magnetanker 5 des elektromagnetischen Betätigungssystems, der in einem Führungsrohr 6 geführt ist, welches von einer Spule 7 umgeben ist, die an die elektrische Zuleitung 7a angeschlossen ist. Im oberen Abschnitt des Führungsrohres 6 ist ein Kopfstück 8 angeordnet und mittels einer Schraubenmutter 9 fest mit dem Betätigungsteil verbunden.

Bei dem in Fig. 1 dargestellten Ventil sollen der Schließzustand und die Dichtigkeit des Faltenbalges 4 überprüft werden. Hierzu dient eine an sich bekannte und in Einzelheiten nicht näher dargestellte Leitwert-Meßeinrichtung, die beispielsweise eine elektrische Brückenschaltung enthalten kann. An den mit Masse M verbundenen Anschluß der Leitwert-Meßeinrichtung ist eine Elektrode E0 angeschlossen, die im Zuflußstutzen Z des Ventils angeordnet wird. An einen eine erste Meßspannung U1 liefernden Anschluß der Leitwert-Meßeinrichtung ist eine weitere Elektrode E1 angeschlossen, die innerhalb des Abflußstutzens A angeordnet wird. Schließlich ist an einen dritten Anschluß der Leitwert-Meßeinrichtung, welche eine Meßspannung U2 liefert, die selbstverständlich den gleichen Spannungswert aufweisen kann wie U1, eine dritte Elektrode E2 angeschlossen. Diese dritte Elektrode ist gegeben durch die elektrisch leitenden Teile des Betätigungssystems, also das Kopfstück 8, das Führungsrohr 6 sowie gegebenenfalls den Magnetanker 5. Wenn zwischen die Elektroden E1 und E0 eine Meßspannung angelegt wird, muß der zwischen diesen beiden Elektroden gemessene elektrische Leitwert einen signifikanten Unterschied aufweisen, je nachdem, ob sich das Ventil im geöffneten oder geschlossenen Zustand befindet. Selbst kleine Undichtigkeiten am Ventilsitz 2 machen sich durch eine entsprechende Erhöhung des Leitwertes bemerkbar.

Das gleiche gilt hinsichtlich der Dichtigkeit des Faltenbalges 4 bei einer Leitwertmessung zwischen den Elektroden E2 und E0. Auch bei einer kleinen Undichtigkeit des Faltenbalges 4 gerät das elektrisch leitende Medium in den Raum des Magnetankers 5 und bewirkt damit eine starke Erhöhung des Leitwertes zwischen den Elektroden E2 und E0.

Das anhand von Fig. 1 geschilderte Meßverfahren läßt sich sehr leicht zur Untersuchung von ganzen Serien von Magnetventilen, beispielsweise in der Endkontrolle, einsetzen. Das Ventil braucht keinerlei besondere konstruktive Merkmale zur Durchführung des Prüfverfahrens aufweisen. Es ist lediglich notwendig, kurzzeitig die Elektroden E0, E1 und E2 anzuschließen, wobei beispielsweise die Elektroden E0 und E1 als elektrisch leitende Anschlußstücke ausgebildet sein können und der dritte Anschluß der Leitwert-Meßeinrichtung mit der Schraubenmutter 9 verbunden wird. Es muß dann lediglich der Leitwert im geschlossenen und gegebenenfalls geöffneten Zustand des Ventils gemessen und mit vorgegebenen Sollwerten verglichen werden.

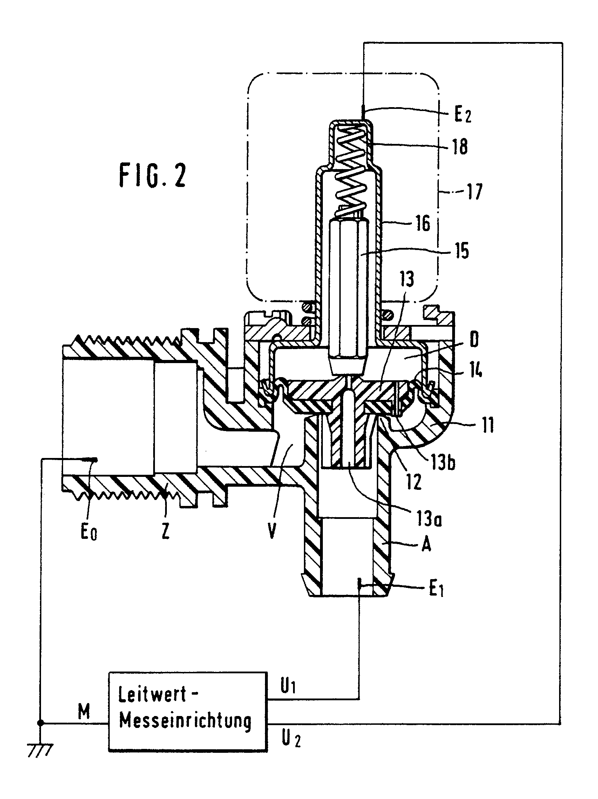

In Fig. 2 ist ein servogesteuertes Ventil dargestellt, bei dem ebenfalls alle mit Flüssigkeit in Berührung geratenden Teile aus Kunststoff bestehen. Das Gehäuse 11 besitzt einen Zuflußstutzen Z und einen Abflußstutzen A. In der Ventilkammer V ist ein Ventilsitz 12 angeordnet, dem ein Ventilteller 13 gegenüberliegt. Die Ventilkammer V ist von einem hinter dem Ventilteller 13 liegenden Druckraum D durch eine Rollmembran 14 getrennt. Der Ventilteller 13 weist einen Durchtrittskanal 13a auf, der durch ein Pilotventil 15 verschließbar ist, das als in einem Rohr 16 geführter Magnetanker ausgeführt ist, der über eine nur angedeutete Spule 17 betätigbar ist. Die Schließstellung im nichterregten Zustand des Betätigungsteils wird durch eine Feder 18 sichergestellt.

Weiterhin befindet sich im Ventilteller 13 eine Steuerbohrung 13b, durch welche das zufließende Medium in den Druckraum D gelangen kann. Bei geschlossenem Pilotventil herrscht in der Ventilkammer V und im Druckraum D der Flüssigkeitsdruck des zufließenden Mediums. Wegen der unterschiedlichen Flächenverhältnisse am Ventilteller 13 ist das Ventil dann geschlossen. Öffnet das Pilotventil 15 so sinkt der Druck im Druckraum D infolgen des Abfließens der Flüssigkeit durch den Durchführungskanal 13a und der Ventilteller 13 öffnet. Beim Schließen des Pilotventils 15 steigt der Druck im Druckraum D wieder an und das Ventil schließt.

Bei dem in Fig. 2 dargestellten Ventil wird mit Hilfe der Leitwert-Meßeinrichtung der Schließzustand des Ventiltellers 13 überprüft, indem analog wie bei dem anhand von Fig. 1 erläuterten Verfahren im Zuflußstutzen Z eine mit dem Masseanschluß verbundene Elektrode E0 angeordnet ist, während im Abflußstutzen A wiederum eine Elektrode E1 zum Anlegen der Meßspannung U1 vorhanden ist. Auf diese Weise kann in der bereits beschriebenen Weise der Leitwert zwischen den Elektroden E1 und E0 bestimmt werden. Damit kann nicht nur festgestellt werden, ob der Ventilteller 13 dicht auf dem Ventilsitz 12 aufsitzt, sondern es kann auch die Dichtigkeit des Pilotventils überpruft werden.

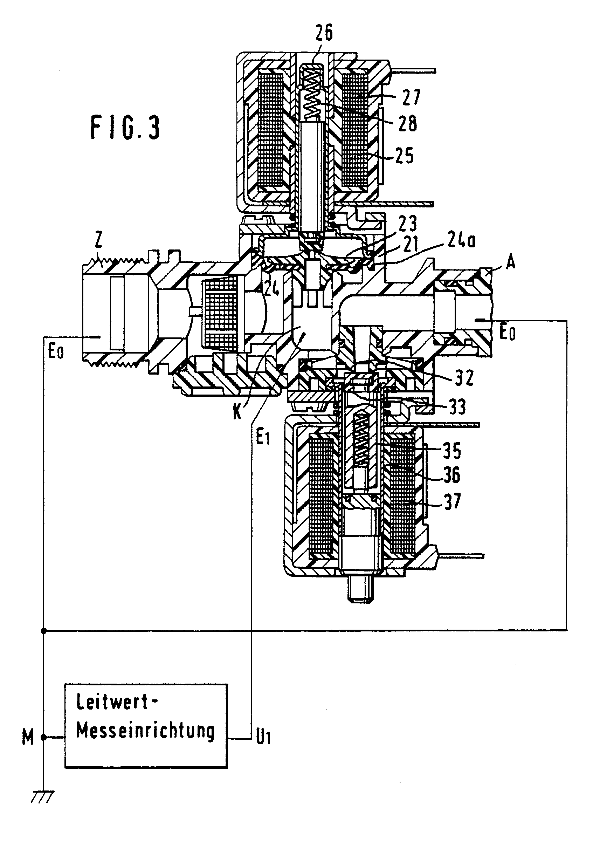

Weiterhin kann bei diesem Ventil überprüft werden, ob die Steuerbohrung 13b im Ventilteller 13 den richtigen Querschnitt aufweist. Hierzu ist ein weiterer Meßpunkt E2' am metallischen Ankerführungsrohr 16 des Druckraumes D angeordnet und es wird der Leitwert zwischen E2' und E0 gemessen. Dieser Leitwert ist abhängig vom Querschnitt der Steuerbohrung 13b. Man kann aufgrund der Größe des Leitwertes auf die Größe dieses Querschnittes schließen. Auch dieses Meßverfahren ist für Serienprüfungen des Ventils außerordentlich gut geeignet, weil es sich sehr leicht am fertiggestellten Ventil ohne konstruktive Veränderungen durchführen läßt. Anhand von Fig. 3 wird ein besonderer Anwendungsfall des Prufverfahrens beschrieben, der sich auf ein sogenanntes "Doppelsicherheitsventil" bezieht. Bei derartigen Ventilen sind zwei Magnetventile in Serie hintereinander geschaltet. Die Ventilkombination besitzt ein gemeinsames Gehäuse 21 mit einem Zuflußstutzen Z und einen Abflußstutzen A. Das erste Ventil weist einen Ventilsitz 22 auf, dem ein Ventilteller 23 gegenüberliegt. Eine mit ihrem Rand 24a am Gehäuse dichtend befestigte Membran 24 trennt bei diesem Ventil den Betätigungsteil vom Medium. Der Ventilteller 23 ist mit einem in einem Führungsrohr geführten Magnetanker 25 verbunden, welcher von der Magnetspule 27 umgeben ist. Oberhalb des Magnetankers 25 ist ein Kopfstück 26 angeordnet, an dem sich eine Rückstellfeder 28 abstützt.

Das zweite Ventil besitzt einen Ventilsitz 32, dem ein Ventilteller 33 gegenüberliegt, welcher mit einem im Führungsrohr 36 geführten Magnetanker 35 verbunden ist. Die Magnetspule ist hier mit 37 bezeichnet.

Zwischen den beiden Ventilsitzen 22 und 32 ist eine Ventilzwischenkammer K angeordnet. Bei geöffneten Ventilen strömt das Medium von Z durch den Ventilsitz 22, die Kammer K und den Ventilsitz 32 zum Abflußstutzen A.

Die Funktion eines derartigen Doppelsicherheitsventils ist nur dann optimal, wenn beide Ventile absolut dicht schließen und auf ihren Schließzustand ständig überwacht werden. Dies läßt sich feststellen, indem geprüft wird, ob zwischen der Ventilzwischenkammer K und dem Zuflußstutzen Z einerseits und dem Abflußstutzen A andererseits bei geschlossenen Ventilen absolute Dichtigkeit gegeben ist.

Zur Durchführung des Prüfverfahrens ist in der Ventilzwischenkammer K eine Elektrode E1 angeordnet, während im Zuflußstutzen Z und im Abflußstutzen A jeweils eine Elektrode E0 angeordnet ist. Es wird nun in der bereits beschriebenen Weise der Leitwert zwischen den Elektroden E1 und E0 gemessen und damit die Dichtigkeit der beiden Ventile bestimmt. Die hier verwendete Leitwert-Meßeinrichtung kann ständig an ein sich im Betrieb befindendes Doppelsicherheitsventil nach Fig. 3 angeschlossen sein und kann in nicht näher beschriebener und an sich bekannter Weise Steuervorrichtungen enthalten, die in gewissen Zeitabständen die Leitwertmessung zwischen den Elektroden automatisch durchführen. Es kann somit der Schließzustand beider Ventile ständig überwacht werden. Wenn bei einem der beiden Ventile die entsprechende Leitwertmessung einen bestimmten Sollwert übersteigt, kann ein Alarmsignal ausgelöst werden.

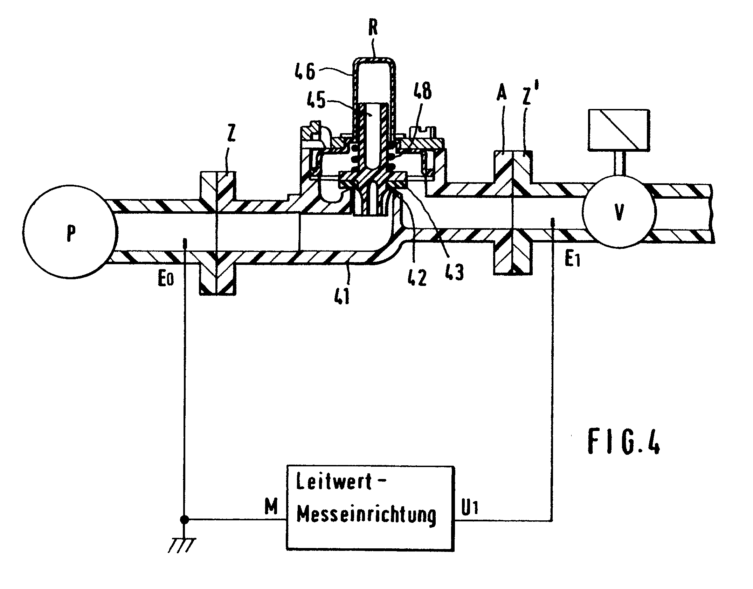

Anhand von Fig. 4 wird nunmehr gezeigt, daß das Verfahren auch zur Prüfung des Schließzustandes oder der Dichtigkeit eines Absperrorgans oder ganz allgemein eines abgeschlossenen flüssigkeitsführenden Leitungssystems benutzt werden kann, das aus elektrisch leitendem Material besteht.

In Fig. 4 soll die Dichtigkeit eines nur symbolisch dargestellten Absperrorgans V, beispielsweise eines Magnetventils, festgestellt werden, das aus elektrisch leitendem Material besteht. Zu diesem Zweck ist vor die Zuflußseite Z' des Ventils V ein aus Kunststoff bestehendes federbelastetes Rückschlagventil R geschaltet, das mit seinem Abflußstutzen A an den Zuflußstutzen Z' angeschlossen ist und dessen Zuflußstutzen Z mit einer Pumpe P verbunden ist, mit deren Hilfe das ganze System unter Flüssigkeitsdruck gesetzt werden kann. Es ist wiederum eine Leitwert-Meßeinrichtung vorhanden, deren einer Anschluß mit einer im Abflußstutzen A angeordneten Elektrode E0 und deren anderer Anschluß mit einer im Zuflußstutzen Z angeordneten Elektrode E1 verbunden ist. Das ganze System wird nun von der Pumpe P her unter Flüssigkeitsdruck gesetzt. Wenn das Ventil V absolut dicht ist, schließt nach Durchführung des Druckausgleiches das Ruckschlagventil R unter der Federbelastung. Sobald im Ventil V eine Undichtigkeit vorhanden ist, öffnet das Rückschlagventil R entsprechend. Die Überprüfung des Schließzustandes bzw. der Dichtigkeit des Ventiles V wird somit zurückgeführt auf eine Messung des Schließzustandes am Rückschlagventil R. Durch die Leitwertmessung zwischen den Elektroden E1 und E0 kann der Schließzustand des Rückschlagventils R sehr genau überprüft werden. Selbstverständlich kann anstelle des Ventils V jede andere abgeschlossene flüssigkeitsführende Einrichtung treten. Beispielsweise ist das anhand von Fig. 4 geschilderte Verfahren sehr gut zur Überprüfung von Hausinstallationen anwendbar, bei der in einem abgeschlossenen Rohrleitungssystem eine ganze Anzahl von Absperrorganen parallelgeschaltet sind.

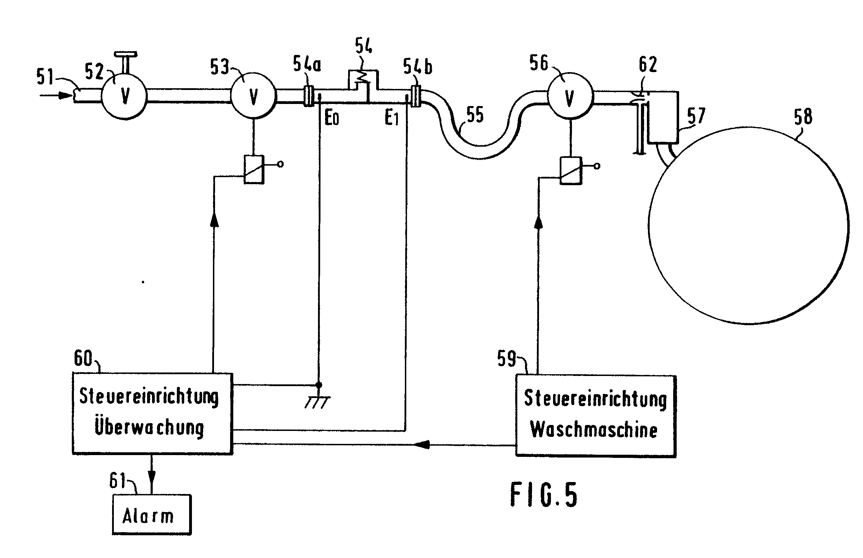

Anhand von Fig. 5 wird eine Ausführungsform einer Einrichtung beschrieben, die zur Überwachung von wasserführenden Haus- und Küchengeräten, also Waschmaschinen, Spülmaschinen u. dergl., gedacht ist. An eine Wasserzuführungsleitung 51 ist über ein handbetätigtes Ventil 52, also beispielsweise einen üblichen Wasserhahn, eine Waschmaschine angeschlossen, von der lediglich die Trommel 58, die Waschmitteleinspülschale 57, eine allgemeine Steuereinrichtung 59 und ein Einlaß-Magnetventil 56 dargestellt sind. Direkt im Anschluß an den Wasserhahn 52 ist ein Sicherheits-Magnetventil 53 angeordnet, an welches sich ein aus Kunststoff bestehendes federbelastetes Rückschlagventil 54 anschließt, dessen Auslaß dann über den üblichen Schlauch 55 mit dem Einlaß-Magnetventil 56 verbunden ist. Die Überprüfung erfolgt mit einem Verfahren wie es weiter oben anhand von Fig. 4 beschrieben wurde. Im Zufluß 54a des Rückschlagventils 54 ist eine Elektrode E0 und im Abfluß 54b eine Elektrode E1 angeordnet. Beide Elektroden sind mit einer Steuer-Einrichtung 60 verbunden. Bei geschlossenem Einlaß-Magnetventil 56 muß, wenn dieses Einlaß-Magnetventil dicht ist und auch der Schlauch 55 und seine Anschlüsse keine Undichtigkeit aufweisen, das Rückschlagventil 54 sich im Schließzustand befinden.

Dies kann durch eine Leitwertmessung zwischen den Elektroden E1 und E0 festgestellt werden. Die Steuereinrichtung 60 ist so ausgelegt, daß das Sicherheits-Magnetventil 53 immer dann in den Schließzustand gesteuert wird und gegebenenfalls eine Alarmeinrichtung 61 bestätigt wird, wenn das Rückschlagventil 54 öffnet, obwohl das Einlaß-Magnetventil 56 geschlossen ist. Zu diesem Zweck ist die Steuereinrichtung 60 mit der Steuereinrichtung 59 der Waschmaschine verbunden, so daß das Steuersignal für das Einlaß-Magnetventil 56 auf die Steuereinrichtung 60 zur Überwachung übertragen werden kann.

Das Sicherheitsventil 53 muß, um allen Gegebenheiten gerecht zu werden, unabhängig von der Druckdifferenz zuverlässig schließen. Vorteilhaft ist es, wenn Sicherheitsventil 53 und Rückschlagventil 54 in einem gemeinsamen Ventilgehäuse zu einer Baueinheit zusammengefaßt sind.

Zwischen das Einlaß-Magnetventil 56 und die Waschmitteleinspulschale 57 ist eine als Injektor ausgebildete Luftstrecke 62 geschaltet, um eine klare Trennung von Frischwasser und Brauchwasser herzustellen.

Die Überwachungseinrichtung kann zusätzlich mit einem Feuchtigkeitsfühler kombiniert werden, um bei intaktem Zulaufsystem auch Undichtigkeiten der Behälter im Waschgerät zu erfassen.

## Patentansprüche

1.  Verfahren zur Prüfung des Schließzustandes, der Dichtigkeit oder des Durchtrittsquerschnittes an einem Beeinflussungsorgan, insbesondere einem Absperrorgan, für elektrisch leitende Flüssigkeiten, bei dem die elektrische Leitfähigkeit zwischen zwei Elektroden (E0,E1) bestimmt wird, die gegeneinander isoliert angeordnet sind und lediglich über die elektrisch leitende Flüssigkeit in Kontakt geraten können, dadurch gekennzeichnet, daß jede über Festkörper laufende elektrisch leitende Verbindung zwischen der Zuflußseite (Z) und der Abflußseite (A) des Beeinflussungsorgans unterbrochen ist und die eine Elektrode (E0) vor der Zuflußseite und die andere Elektrode (E1) hinter der Abflußseite des Beeinflussungsorgans mit der elektrisch leitenden Flüssigkeit in Kontakt gebracht wird.

2.  Verfahren nach Anspruch 1, angewendet auf Ventile, bei denen mindestens alle mit der elektrisch leitenden Flüssigkeit in Berührung geratenden Teile aus Kunststoff bestehen, dadurch gekennzeichnet, daß die Elektroden (E0, E1, E2) an vorgegebenen Stellen im Durchtrittsweg der Flüssigkeit jeweils vor und hinter dem Ventilsitz (2, 12, 22, 32, 42) angeordnet werden und der elektrische Leitwert im geschlossenen und geöffneten Zustand des Ventils gemessen und verglichen wird.

3.  Verfahren nach Anspruch 2 bei einem Ventil mit vom Medium getrenntem Betätigungsteil, dadurch gekennzeichnet, daß im Betätigungsteil (5 bis 9) eine zusätzliche Elektrode (E2) angeordnet wird und der elektrische Leitwert zwischen dieser zusätzlichen Elektrode und den übrigen Elektroden (E0, E1) im geöffneten und/oder geschlossenen Zustand des Ventils gemessen wird.

4.  Verfahren nach Anspruch 3 bei einem Magnetventil, dadurch gekennzeichnet, daß als zusätzliche Elektrode (E2) der aus elektrisch leitendem Material bestehende Magnetanker (5) bzw. die Magnetankerführung (6, 8, 9) dient.

5.  Verfahren nach Anspruch 2 bei einem eigenmediumsgesteuerten Ventil, dessen Zuflußseite (Z) über einen im Verschlußorgan (13) angeordneten Durchtrittskanal (13b) mit einem mediumbeaufschlagten Druckraum (D) verbunden ist, dadurch gekennzeichnet, daß im Druckraum (D) eine zusätzliche Elektrode (E2') angeordnet wird und der elektrische Leitwert zwischen dieser zusätzlichen Elektrode (E2') und der zuflußseitig angeordneten Elektrode (E0) gemessen wird.

6.  Verfahren nach Anspruch 1 angewendet zur Prüfung des Schließzustandes oder der Dichtigkeit eines Absperrorgans oder eines abgeschlossenen Leitungssystems aus elektrisch leitendem Material, dadurch gekennzeichnet, daß in die Zuleitung des Absperrorgans (V) oder des Leitungssystems ein eine elektrische Trennstelle bildendes Rückschlagventil (R, 54) aus Kunststoffmaterial eingeschaltet wird, dessen Zuflußseite (Z) an eine Flüssigkeitsdruckquelle (T) angeschlossen ist, mittels der das Absperrorgan bzw. Leitungssystem im geschlossenen Zustand unter einen vorgegebenen Flüssigkeitsdruck gesetzt wird und dann zwischen den vor der Zuflußseite (Z) und hinter der Abflußseite (A) des Rückschlagventils (R) angeordneten Elektroden (E1, E0) der Leitwert gemessen und dadurch der Schließzustand des Rückschlagventils (R) bestimmt wird.

7.  Einrichtung zur ständigen Überwachung des Öffnungsund Schließzustandes eines Ventils oder eines Systems von Ventilen für elektrisch leitende Flüssigkeiten, gemäß dem Verfahren nach einem der Ansprüche 2 bis 5, bei der in jedem zu überwachenden Ventil zwei Elektroden (E0, E1) gegeneinander isoliert derart angeordnet sind, daß sie lediglich über die elektrisch leitende Flüssigkeit in Kontakt geraten können und die Elektroden mit einer elektrischen Auswerteschaltung zur Messung des Leitwertes zwischen den Elektroden verbunden sind, dadurch gekennzeichnet, daß bei Ventilen, bei denen mindestens alle mit der elektrisch leitenden Flüssigkeit in Berührung geratenden Teile aus Kunststoff bestehen, in jedem der zu überwachenden Ventile vor der Zuflußseite und hinter der Abflußseite jeweils eine Elektrode (E0, E1, E2) im Flüssigkeitsdurchtrittsweg angeordnet ist und die elektrische Auswerteschaltung in vorgegebenen Abständen Leitwertmessungen durchführt und mit Registrier- und/oder Alarmeinrichtungen verbunden ist.

8. Einrichtung nach Anspruch 7 zur ständigen Überwachung der Dichtigkeit eines abgeschlossenen Flüssigkeitssystems gemäß dem Verfahren nach Anspruch 6, insbesondere zur Überwachung von wasserführenden Haushaltsgeräten, mit einem Einlaß-Magnetventil (56), bei dem zwischen dem Anschluß des Flüssigkeitsleitungssystems und der Flüssigkeitsquelle ein Sicherheits-Magnetventil (53) angeordnet ist, das von einer elektrischen Steuervorrichtung (60) in die Schließstellung gesteuert wird sobald von einer Sensoreinrichtung ein eine Undichtigkeit anzeigendes Steuersignal abgegeben wird, dadurch gekennzeichnet, daß in der Zuflußleitung (51) unmittelbar im Anschluß an das Sicherheitsmagnetventil (53) als zu überwachendes Ventil ein federbelastetes Rückschlagventil (54) aus Kunststoff angeordnet ist und unmittelbar vor der Zuflußseite (54a) und hinter der Abflußseite (54b) dieses Rückschlagventils jeweils eine Elektrode (E0, E1) im Flüssigkeitsdurchtrittsweg angeordnet ist, die mit der elektrischen Auswerteschaltung (60) zur Messung des Leitwertes zwischen den Elektroden verbunden ist und die Steuervorrichtung (59-60) sowohl mit dem Einlaß-Magnetventil (56) als auch mit dem Sicherheitsmagnetventil (53) verbunden ist und ein das Sicherheitsmagnetventil (53) schließendes Steuersignal abgibt sobald bei geschlossenem Einlaß-Magnetventil (56) ein vorgegebener Betrag des gemessenen Leitwertes überschritten wird.

## Claims

1. Method of checking the closed state, the tightness or the flow cross-section at an influencing element, in particular a shut-off element, for electrically conductive liquids in which the electrical conductivity is determined between two electrodes (E0, E1), which are arranged in an insulated fashion with respect to one another and can come into contact only via the electrically conductive liquid, characterised in that each electrically conductive connection, running via solids, between the feed side (Z) and the discharge side (A) of the influencing element is interrupted, and one electrode (E0) is brought into contact with the electrically conductive liquid upstream of the feed side of the influencing element and the other electrode (E1) is brought into contact with the electrically conductive liquid downstream of the discharge side of the influencing element.

2. Method according to Claim 1, applied to valves in which at least all the parts which come into contact with the electrically conductive liquid consist of plastic, characterised in that the electrodes (E0, E1, E2) are arranged at prescribed points in the flow path of the liquid upstream and downstream respectively of the valve seat (2, 12, 22, 32, 42), and the electrical conductance is measured and compared in the closed and open state of the valve.

3. Method according to Claim 2 in the case of a valve having an actuating element separated from the medium, characterised in that an additional electrode (E2) is arranged in the actuating element (5 - 9), and the electrical conductance is measured between this additional electrode and the remaining electrodes (E0, E1) in the open and/or closed state of the valve.

4. Method according to Claim 3 in the case of a solenoid valve, characterised in that the magnet armature (5) consisting of electrically conductive material, or the magnet armature guide (6, 8, 9) serves as the additional electrode (E2).

5. Method according to Claim 2 in the case of a valve having intrinsic medium control whose feed side (Z) is connected via a flow channel (13b) arranged in the sealing element (13) to a pressure chamber (D) pressurised by the medium, characterised in that an additional electrode (E2') is arranged in the pressure chamber (D), and the electrical conductance is measured between this additional electrode (E2') and the electrode (E0) arranged on the feed side.

6. Method according to Claim 1 and applied for checking the closed state or the tightness of a shut-off element or of a sealed system of lines made from electrically conductive material, characterised in that there is inserted in the feed line of the shut-off element (V) or of the system of lines a non-return valve (R, 54) which is made from plastic material and forms an electrical isolating point and whose feed side (Z) is connected to a liquid pressure source (T) by means of which the shut-off element or system of lines is subjected in the closed state to a prescribed liquid pressure, and the conductance is then measured between the electrodes (E1, E0) arranged upstream of the feed side (Z) and downstream of the discharge side (A) of the non-return valve (R), and the closed state of the non-return valve (R) is determined therefrom.

7. Device for permanently monitoring the open and closed state of a valve or of a system of valves for electrically conductive liquids using the method according to one of Claims 2 to 5, in which device two electrodes (E0, E1) are arranged in an insulated fashion with respect to one another in each valve to be monitored in such a way that they can come into contact only via the electrically conductive liquid, and the electrodes are connected to an electrical evaluation circuit for measuring the conductance between the electrodes, characterised in that, in the case of valves in which at least all the parts which come into contact with the electrically conductive liquid consist of plastic, an electrode (E0, E1, E2) is arranged in each of the valves to be monitored respectively upstream of the feed side and downstream of the discharge side in the liquid flow path, and the electrical evaluation circuit carries out conductance measurements at prescribed intervals and is connected to recording and/or alarm devices.

8. Device according to Claim 7 for permanently monitoring the tightness of a closed liquid system using the method according to Claim 6, in particular for monitoring water-bearing domestic appliances, having an inlet solenoid valve (56), in which device there is arranged between the connection of the system of liquid lines and the liquid source a safety solenoid valve (53), which is triggered into the closed position by an electrical control device (60) as soon as a control signal indicating a leak is transmitted by a sensor device, characterised in that a spring-loaded non-return valve (54) made from plastic is arranged, as the valve to be monitored, in the feed line (51) immediately adjoining the safety solenoid valve (53), and an electrode (E0, E1) is arranged respectively immediately upstream of the feed side (54a) and downstream of the discharge side (54b) of this non-return valve in the liquid flow path, which electrode is connected to the electrical evaluation circuit (60) for measuring the conductance between the electrodes, and the control device (59 - 60) is connected both to the inlet solenoid valve (56) and to the safety solenoid valve (53) and transmits a control signal which closes the safety solenoid valve (53) as soon as a prescribed amount of the measured conductance is exceeded in the case of a closed inlet solenoid valve (56).

## Revendications

1. Procédé pour le contrôle de l'état de fermeture, de l'étanchéité ou de la section de passage d'un organe de commande, en particulier un organe d'arrêt, pour des liquides électriquement conducteurs, sur lequel la conductibilité électrique est déterminée entre deux électrodes (E0, E1) qui sont disposé sous isolement mutuel et qui ne peuvent entrer en contact que par le liquide électriquement conducteur, caractérisé par le fait que toute liaison électriquement conductrice passant par des corps solides entre le côté d'admission (Z) et le côté d'échappement (A) de l'organe de commande est interrompue et que l'une des électrodes (E0) est mise en contact avec le liquide électriquement conducteur en amont du côté admission, et que l'autre électrode (E1) est mise en contact avec le liquide électriquement conducteur en aval du côté échappement dudit organe de commande.

2. Procédé selon la revendication 1 appliqué à des vannes sur lesquelles au moins toutes les parties entrant en contact avec le liquide électriquement conducteur sont en matière synthétique, caractérisé par le fait que les électrodes (E0, E1, E2) sont disposées à des points prédéterminés sur le trajet de passage du liquide, respectivement en amont et en aval du siège de vanne (2, 12, 22, 32, 42) et qu'il y a mesure et comparaison des conductibilités électriques à l'état fermé et à l'état ouvert.

3. Dispositif selon la revendication 2 sur une vanne comportant un élément de manoeuvre séparé du fluide, caractérisé par le fait que dans l'élément de manoeuvre (5 à 9) est disposée une électrode supplémentaire (E2) et que la conductibilité électrique entre cette électrode supplémentaire et les autres électrodes (E0, E1) est mesurée à l'état ouvert et/ou à l'état fermé de la vanne.

4. Procédé selon la revendication 3 sur une vanne magnétique, caractérisé par le fait que l'induit (5) ou le guidage (6, 8, 9) de l'induit de l'aimant qui est constitué en matière électriquement conductrice sert d'électrode complémentaire (E2).

5. Procédé selon la revendication 2 sur une vanne commandée par son propre fluide dont le côté admission (Z) est relié à une chambre placée sous pression (D) remplie de fluide par un canal de passage (13b) disposé dans l'organe d'arrêt (13), caractérisé par le fait que dans la chambre sous pression (D) est disposée une électrode supplémentaire (E2') et que la conductibilité électrique entre cette électrode supplémentaire (E2') et l'électrode (E0) disposée du côté admission est mesurée.

6. Procédé selon la revendication 1 appliqué au contrôle de l'état de fermeture ou de l'étanchéité d'un organe de commande ou d'un circuit fermé en matière électriquement conductrice, caractérisé par le fait que dans la conduite d'admission de l'organe de commande (V) ou du circuit est monté un clapet anti-retour (R,54) en matière synthétique formant un point de séparation électrique, dont le côté admission (Z) est raccordé à une source (T) de compression du liquide au moyen de laquelle l'organe d'arrêt ou le circuit est mis en état fermé sous une pression prédéterminée du liquide, et ensuite est mesurée la conductibilité entre les électrodes (E1, E0) disposées en amont du côté admission (Z) et en aval du côté échappement (A) du clapet anti-retour (R) et que de ce fait se trouve déterminé l'état de fermeture dudit clapet anti-retour (R).

7. Dispositif pour la surveillance constante de l'état d'ouverture et de fermeture d'une vanne ou d'un système de vannes pour liquides électriquement conducteurs, selon le procédé conforme à l'une des revendications 2 à 5, dans lequel dans chaque vanne à surveiller sont disposées sous isolement réciproque deux électrodes (E0, E1) de telle sorte qu'elles ne peuvent entrer en contact que par le liquide électriquement conducteur et que les électrodes sont reliées à un circuit d'analyse électrique destiné à mesurer la conductibilité entre lesdites électrodes, caractérisé par le fait que sur les vannes sur lesquelles au moins toutes les parties entrant en contact avec le liquide électriquement conducteur sont en matière synthétique, que dans chaque vanne à surveiller est disposée une électrode (E0, E1, E2) respectivement en amont du côté admission et en aval du côté échappement dans le trajet de passage du liquide et que le circuit d'analyse électrique exécute des mesures de la conductibilité à des intervalles prédéterminés et est relié à des installations d'enregistrement et/ou d'alarme.

8. Dispositif selon la revendication 7 pour la surveillance constante de l'étanchéité d'un circuit de liquide fermé selon le procédé conforme à la revendication 6, en particulier pour la surveillance d'instruments ménagers à circulation d'eau, comportant une vanne d'admission magnétique (56) dans laquelle entre le raccordement du circuit de circulation du liquide et la source de liquide est disposée une vanne magnétique de sécurité (53) qui est pilotée vers la position de fermeture par un dispositif de commande électrique (60) dès qu'un dispositif à cellule sensible émet un signal pilote indiquant la présence d'une non-étanchéité, caractérisé par le fait que dans la conduite d'admission (51), directement dans le raccord à la vanne magnétique de sécurité (53) est disposé un clapet anti-retour (54) en matière synthétique, chargé d'un ressort, servant de vanne de contrôle et directement en amont du côté admission (54a) et en aval du côté échappement (54b) de ce clapet anti-retour, est disposée respectivement une électrode (E0, E1) dans le trajet de passage du liquide, ladite électrode étant reliée au circuit d'analyse électrique (60) destiné à mesurer la conductibilité entre les électrodes, et le dispositif de commande (59, 60) étant relié d'une part à la vanne magnétique à l'admission (56) et d'autre part à la vanne magnétique de sécurité (53), et émet un signal pilote fermant la vanne de sécurité (53) dès que, la valeur de la conductibilité mesurée se trouve dépassée dans une proportion prédéterminée, la vanne magnétique (56) étant fermée.

FIG.1

Leitwert-Messeinrichtung

FIG. 2

Leitwert-
Messeinrichtung

# FIG.3

FIG.4

EP 0 199 055 B1

Leitwert-
Messeinrichtung

FIG. 5

Steuereinrichtung Waschmaschine

Steuereinrichtung Überwachung

Alarm